# EUROPEAN PATENT APPLICATION

(11) **EP 4 324 423 A1**
(43) Date of publication of application: **21.02.2024**
(21) Application number: 21851980.9
(22) Date of filing: 16.11.2021
(51) Int. Cl.: A61C 7/30, A61C 9/00, A61C 8/00

(54) **SCAN BODIES AND COMPLEMENTARY CHAIN**

(30) Priority: 12.04.2021 PT 2021117173
(71) Applicant: Dos Santos Redinha, Luís António, 2770-174 Paco De Arcos (PT); Da Costa Cabecinha Pacheco Viegas, Diogo Miguel, 1600-673 Lisboa (PT)
(72) Inventor: Dos Santos Redinha, Luís António, 2770-174 Paco De Arcos (PT); Da Costa Cabecinha Pacheco Viegas, Diogo Miguel, 1600-673 Lisboa (PT)
(74) Representative: Pereira da Cruz, Joao
(86) International application number: PCT/IB2021/060610
(87) International publication number: WO 2022/219395

(57) **Abstract**

The present invention relates to a scan body (7), which comprises a cylindrical or polyhedral shaped body and around its body protruding macro geometrical shapes, said shapes being distinct among them when used at least two. Additionally, the present invention relates to a helical chain (7) comprising a plurality of links (8), said links (8) having a rotation off set of 20 degrees clockwise or anti-clockwise with respect to the preceding link (8). At least two scan bodies (2) and one helical chain (7) form a system for intraoral scanning, wherein the helical chain (7) is positioned between at least two scan bodies (2), wherein the links (8) slide to at least two grooves of the scan bodies (2), each.

## Description

### FIELD OF THE INVENTION

The present invention falls within the field of dentistry, of scan bodies, relating in particular to scan bodies with chain for associated impressions, more particularly to differentiated scan bodies and elastic hybrid resin helical chain for impressions with intraoral scanners.

### SCOPE OF THE INVENTION

The constant advance of technology in all areas of knowledge has allowed the development of the various applications used, these applications contributing to a more comfortable, healthier and easier life of the human being. Innumerable offers are constantly appearing in the market in order to meet the human demand, which is increasingly attentive to innovative products that can make a difference in terms of practicality on their lives.

Nowadays, it is possible to perform dental treatments with high efficiency and excellence. Due to the current innovations, some stages of the treatment process are eliminated, while at the same time greater patient comfort is guaranteed. An example of this is the new digital impression technologies using intraoral scanners, which are an alternative to conventional impression techniques.

As a benefit in the field of rehabilitation with implants, digital impressions allow a virtual assessment of the implant prosthetic space - depth of the restorative interface and configuration of the emergence profile - to be carried out before starting the laboratory stages of rehabilitation. These impressions, when performed with the aid of intraoral scanners, provide technical advantages, as well as comfort for the patient.

### TECHNICAL PROBLEMS TO BE SOLVED

In situations of contiguous implant impressions or edentulous arches, the final impression is often difficult and of doubtful precision because the presence of contiguous scan bodies, without interposed teeth, or the extension or mobility of soft tissues does not facilitate the scanning processes. What this means is that when there are no teeth between the scan bodies - and scan body herein means the product that replaces the tooth, in order to know where the implant is placed, this task is difficult, even more so when these bodies are distant and not contiguous and between them we only have gum (soft tissue). Thus, there is high difficulty in using scan bodies in contiguous implants without interposed teeth. Additionally, the fact that the scan bodies do not present a macro morphology that differentiates their several faces, often without morphological elements that allow, in an easy way, the correct overlapping of images between the scan bodies and the surrounding tissues, makes the scanning process difficult, i.e. it is hard to differentiate the several scan bodies when they are more than one, because they are identical among them and there is nothing that differentiates or references them.

### BACKGROUND OF THE INVENTION

The scientific evidence of several studies attests to the difficulty in obtaining accurate images being directly proportional to the increase in the area to be scanned, presenting less error for partial arches when compared to the scanning of total arches. Arches are understood as all the upper and lower teeth, i.e., the teeth present in each one of the jaws. Apart from the extension, there are other factors which contribute to the lack of accuracy in the process, such as the mobility of the soft tissue, the angulation of the scan bodies, the proximity between implants and the amount of gum around the implant.

The dynamism of digital dentistry is documented in the literature, but information is vague regarding the accuracy of the final result in total arch cases. Multiple protocols and techniques exist on the market, however no standardization is defined.

The scan bodies, as they are designated in this technical area, which are currently available on the market present, for the overwhelming majority of cases, regular cylindrical or polyhedral bodies with few morphological irregularities.

### SUMMARY OF THE INVENTION

Therefore, the present invention relates to differentiated scan bodies (2), as a modification to their macro geometry is proposed, and is further complemented by an elastic helical chain to be used in full-arch impressions in order to facilitate and improve the accuracy of digital impressions in dental implant prosthesis.

### DESCRIPTION OF THE FIGURES

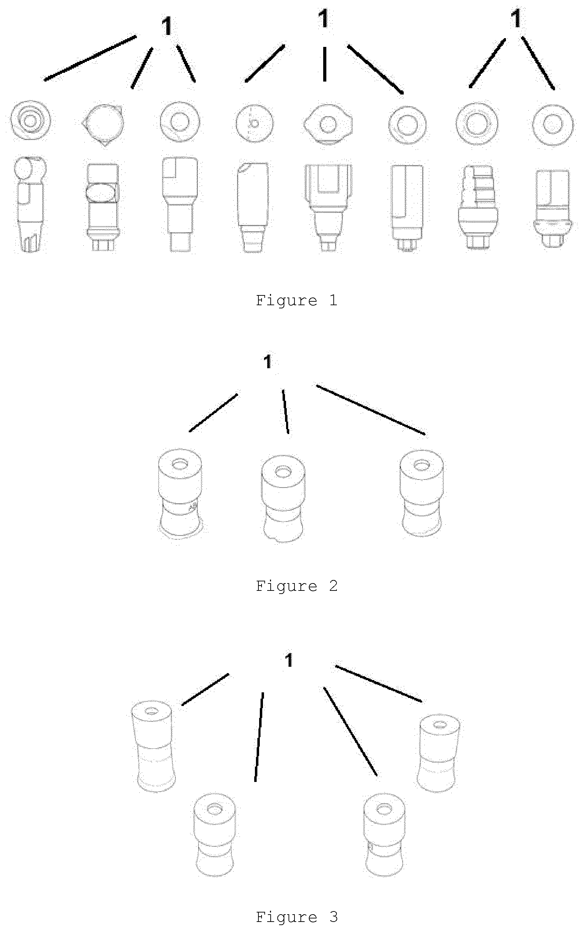

Figure 1 - representation of several existing state-of-the-art scan bodies (1) currently available on the market, being illustrated as regular cylindrical or polyhedral bodies with few morphological irregularities.
Figures 2 and 3 - representation of state-of-the-art scan bodies (1), for a case of impression of contiguous implants (figure 2) or in arches (figure 3), in order to show the difficult and doubtful precision of the final impression due to the presence of scan bodies, without teeth between them, or for a better referencing, being perceptible how these bodies do not facilitate the scanning process.

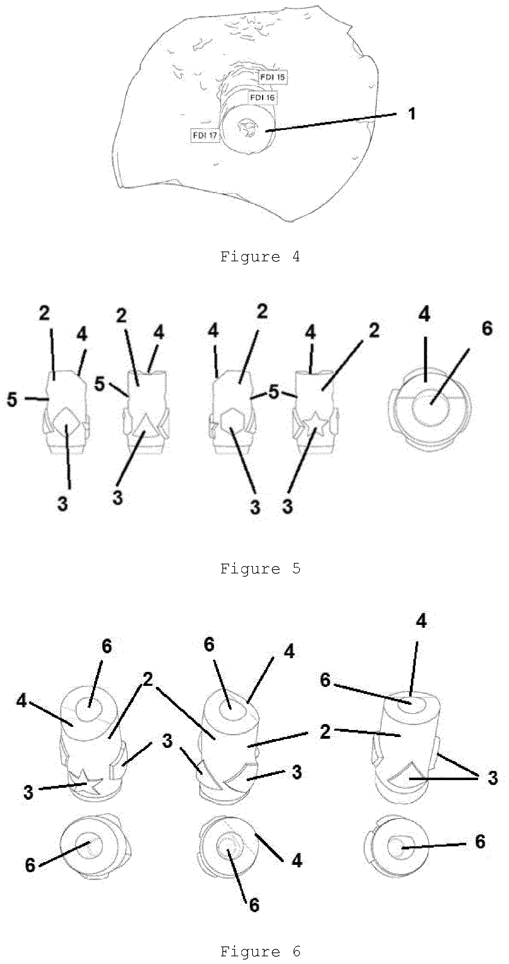

Figure 4 - representation of a case of state-of-the-art scan bodies (1), where it is clear that they do not allow the correct overlapping of images between them and the surrounding tissues, thus making the scanning process difficult.
Figures 5 and 6 - representation of the present invention where the scan body (2), the bevelled top (4) and the protruding macro geometric shape (3) are identified, being also visible the groove (5) and the hole (6) where the screw for insertion of the piece / implant to be scanned is inserted.

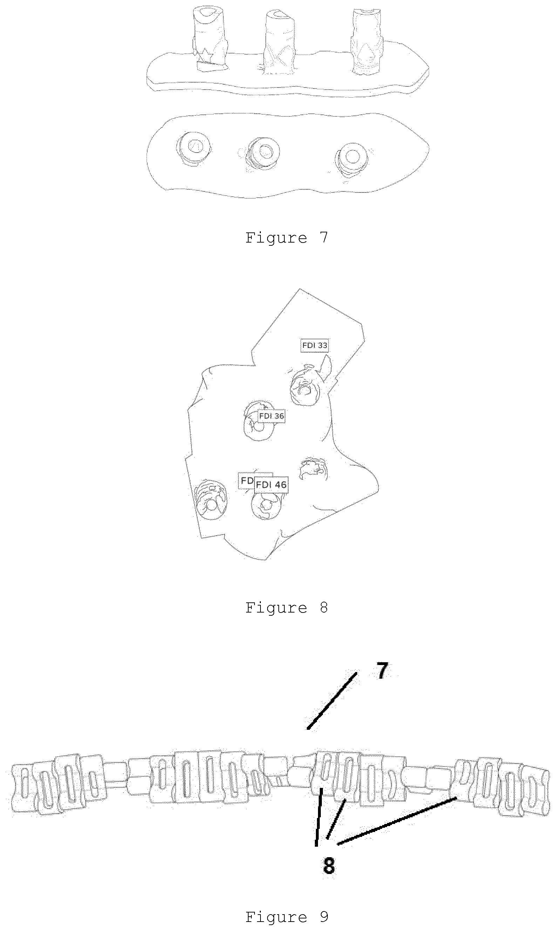

Figures 7 and 8 - representation of the three-dimensional references for a scanning with the new scan bodies (2).
Figure 9 - representation of a semi-rigid elastic helical chain (7) with links (8) of quadrangular shape.

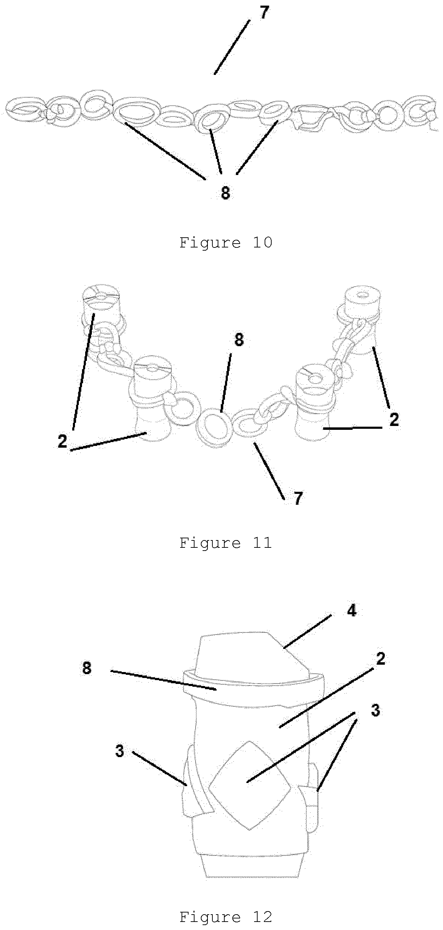

Figure 10 - representation of a semi-rigid elastic helical chain (7) with links (8) of circular shape with a diameter 1 mm smaller than that of the scan body (2) .
Figure 11 - Representation of the helical chain (7) with circular links (8) on the scan bodies (2).
Figure 12 - representation of a scan body (2) with bevelled top (4) and protruding macro geometrical shape (3), showing how a link (8) of a scanning helical chain is positioned.

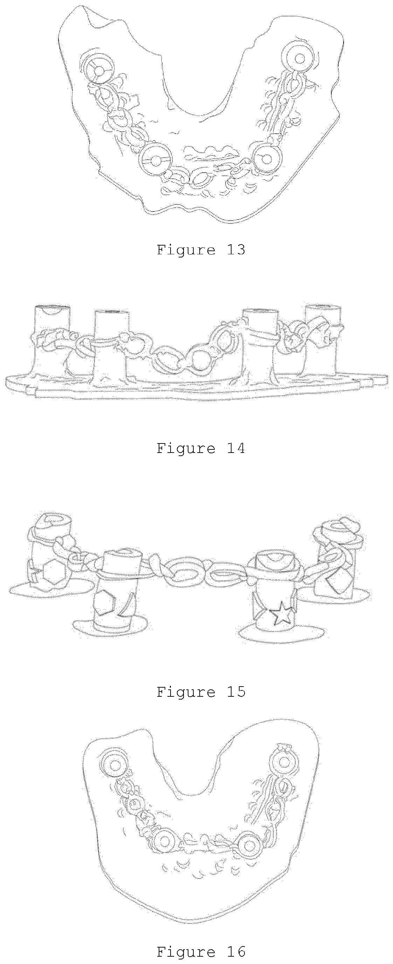

Figures 13, 14, 15 and 16 - representation of the helical chain (7) with circular links (8) in the scan bodies (2), showing a simulation of the insertion into soft tissues.

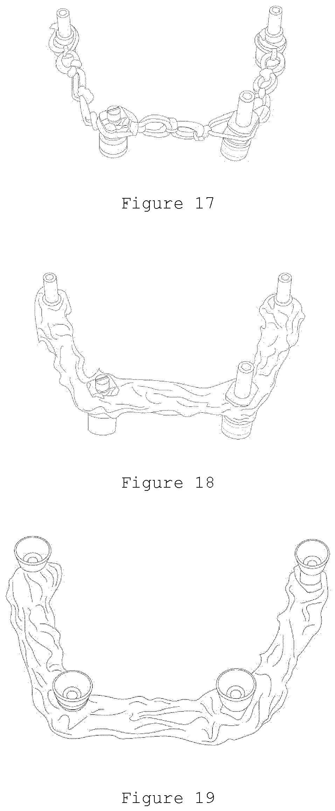

Figure 17 - representation of the application of the complementary scanning helical chain (7) in a conventional way when used on conventional impressions, which is rigid "per se" if light curable.
Figures 18 and 19 - representation of the application of the complementary scanning helical chain (7) as a support for self- or light-curable acrylic resin or composite.

### DETAILED DESCRIPTION OF THE INVENTION

The present invention relates to a differentiated scan body (2) for dental medicine, which presents a body of cylindrical or polyhedral shape, bevelled (4) at the top, and has protruding macro geometrical shapes (3) which are distinct among the scan bodies (2) in use, the said shapes being preferably in a number equal or greater than three and around the structure of the scan body (2).

The scan body (2) further presents a groove (5) or constriction, located in the upper third of its body, and this groove (5) or constriction presenting a perimeter smaller than the perimeter of the structure of the scan body by approximately 1 mm.

The fixing of the scan body (2) to the part to be scanned, implant or abutment, is performed through a screw with the same characteristics of the scan bodies currently available on the market and known by those skilled in the art, and which is inserted into the hole (6).

The three-dimensional references, which are merely the protruding macro geometrical shapes (3) of the scan bodies (2) allow for more fluent and precise impressions of adjacent dental implants with intraoral scanners (IOS), comparatively to the scan bodies of the state of the art (1) with no differentiation between them, since there is difficulty and irregular precision when scanning implants in edentulous arches due to the distance between the scan bodies, as well as the little morphologic exuberance and/or mobility of the soft tissues.

It is also an object of the present invention a semi-rigid elastic helical chain (7), comprised of a plurality of links (8) of quadrangular or circular shape with diameter 1mm smaller than the diameter of the scan body (2). These links (8) of the helical chain (7) have a rotation off set of 20 degrees clockwise or anti-clockwise with respect to the preceding link.

The links (8) of the helical chain (7), in a sectional view, can be massive - of solid colour - or alternatively transparent, hollow and filled with a high precision light-curable resin, this second embodiment allowing the light-curing of the chain after it being positioned, thus resulting in a rigid structure.

This helical chain (7) together with the scan bodies (2) allows an efficient intraoral scanning, which constitutes a system for intraoral scanning. Firstly, the helical chain (7) must be positioned on the scan bodies (2), without tension caused by the helical chain (7) between the scan bodies (2) and taking care not to let the helical chain (7) contact the soft tissues. Optionally, light-curing of the same can be made.

The presence of a three-dimensional helical chain (7) with exuberant macro geometry and relative angulation of each link (8) of the helical chain (7) with the preceding link (8), positioned between the scan bodies (2), enables the scanning process to flow more easily and more accurately in edentulous arches.

The use of the scan bodies (2), which are the object of the present invention, together with the complementary scanning helical chain (7), which is also an object of the present invention, makes the process more effective and rigorous, since the groove (5) existing in the upper third of the scan bodies (2) provides for an easy and correct positioning of the complementary scanning chain, along with the bevelled top (4), so as to slide the helical chain (7) for positioning the same up to the groove (5) .

The complementary scanning helical chain (7) can also be applied in a conventional manner when used in conventional impressions, being rigid "per se" if light-curable, or as a support for self- or light-curable acrylic resin or composite.

As will be evident to a person skilled in the art, the present invention should not be limited to the embodiments described herein, with a number of changes being possible, which remain within the scope of this invention. Of course, the preferred embodiments above described are combinable in the different possible forms, the repetition of all such combinations being herein avoided.

## Claims

1. Scan body (2) comprising a cylindrical or polyhedral-shaped body and a hole (6) for attachment to the part to be scanned, **characterized in that** the top of the scan body being bevelled (4) and having around the scan body (2) protruding macro geometrical shapes (3), these protruding macro geometrical shapes (3) being at least three, the scan body also has a groove (5), located in its upper third, and this groove (5) having a perimeter smaller than the perimeter of the scan body by approximately 1 mm.

2. Semi-rigid elastic helical chain (7) **characterized in that** it comprises a plurality of links (8), said links (8) having a rotation off set of 20 degrees clockwise or anti-clockwise with respect to the preceding link (8).

3. Chain (7) according to the previous claim wherein the links (8) have a quadrangular or circular shape having a diameter 1mm less than the diameter of the scan body (2) .

4. Chain (7) according to the previous claim wherein the links (8) are massive and solid coloured.

5. Chain (7) according to the previous claim wherein the links (8) are transparent, hollow and filled with a light-curable high-precision resin.

6. System for intraoral scanning **characterized in that** it comprises:
a. at least two of the scan bodies (2) described in claim 1, said bodies having protruding macro geometric shapes (3) which are distinct among them (2) ;
b. a helical chain as described in claims 1 to 5;
c. the helical chain (7) is positioned between at least two scan bodies (2), wherein at least two links (8) of the helical chain (7) slide to at least two grooves (5) of the scan bodies (2), each.
